# NEUE EUROPÄISCHE PATENTSCHRIFT

(11) **EP 3 963 232 B2**
(45) Veröffentlichungstag und Bekanntmachung des Hinweises auf die Entscheidung über den Einspruch: **04.03.2026**
(45) Hinweis auf die Patenterteilung: 07.06.2023
(21) Anmeldenummer: 20730964.2
(22) Anmeldetag: 28.04.2020
(51) Int. Cl.: F16G 1/20, G01M 17/02

(54) **VERFAHREN ZUR HERSTELLUNG EINES ENDLOSBANDES MIT EINEM BANDKÖRPER**
METHOD FOR PRODUCING A CONTINUOUS BELT WITH A BELT BODY
PROCÉDÉ DE FABRICATION D'UNE COURROIE SANS FIN COMPRENANT UN CORPS DE COURROIE

(30) Priorität: 29.04.2019 AT 503912019
(43) Veröffentlichungstag der Anmeldung: 09.03.2022
(73) Patentinhaber: Berndorf Aktiengesellschaft, 2560 Berndorf (AT)
(72) Erfinder: HAYDN, Markus, 2353 Guntramsdorf (AT); STÜCKLER, Thomas, 2630 Ternitz (AT); SÜALP, Pelin, 1200 Wien (AT); SZIGETHI, Richard, 7201 Neudörfl (AT)
(74) Vertreter: Burger, Hannes
(86) Internationale Anmeldenummer: PCT/AT2020/060173
(87) Internationale Veröffentlichungsnummer: WO 2020/220062

(56) Entgegenhaltungen:
- EP-A2- 0 393 505
- WO-A1-2016/123645
- DE-U1- 20 110 653
- JP-A- 2009 069 122
- US-A- 5 681 612

## Beschreibung

Die Erfindung betrifft ein Verfahren zur Herstellung eines Endlosbandes gemäß dem Oberbegriff von Anspruch 1.

Weiters betrifft die Erfindung ein Endlosband gemäß dem Oberbegriff von Anspruch 10.

Bänder für Fahrzeugprüfstände, Windkanäle und dergleichen, weisen oft Oberflächenbeläge bzw. Beschichtungen auf, die in einer Dauerbelastung zu einer Rissbildung neigen können, da es sich hierbei oftmals um aufgeklebte Folien handelt. Weiters geben die bekannten Beschichtungen tatsächliche Straßenverhältnisse nur unzureichend wieder, was vor allem hinsichtlich Tests in Fahrzeugprüfständen und Windkanälen von Nachteilen ist. Einschlägige Verfahren bzw. Endlosbänder sind aus der WO2016123645A1 sowie der JP2009069122A bekannt geworden.

Es ist daher eine Aufgabe der Erfindung, die Nachteile der bekannten Lösungen zu überwinden und ein Endlosband insbesondere für den Einsatz in Fahrzeugprüfständen und Windkanälen zu schaffen, welches einen mechanisch sehr strapazierfähigen Belag aufweist, der sich auch unter Dauerbelastungen nicht von dem Endlosband löst und der gleichzeitig reale Stra-ßenverhältnisse gut wiedergibt. Mit der erfindungsgemäßen Lösung lässt sich zudem ein Ablösen der Beschichtung auch bei sehr kleinen Biegeradien des Endlosbandes verhindern.

Diese Aufgabe wird mit einem Verfahren der eingangs genannten Art erfindungsgemäß durch die Merkmale des kennzeichnenden Teils von Anspruch 1 gelöst.

Durch die erfindungsgemäße Lösung kann zum einen ein Belag mit einer gemittelten Rauheit, insbesondere einer gemittelten Rautiefe, und/oder einer gemittelten Oberflächenbeschaffenheit und/oder Struktur erzielt werden, wie sie einem gemittelten Straßenbelag entspricht bzw. entsprechen oder zumindest ein Belag realisiert werden, der sich einem Straßenbelag optisch und/oder hinsichtlich der Rutschhemmung annähert, zum anderen kann der Belag direkt auf die Oberfläche des Bandkörpers aufgetragen und eine sehr gute Haftung zwischen Belag und Bandkörper erzielt werden, ohne dass hierbei zusätzlich eine Haftvermittlerschicht erforderlich wäre. Weiters erfüllt der aufgebrachte Belag eine Schutzfunktion für den Bandkörper, insbesondere hinsichtlich Stoß-, Schlag- und Scherkräften sowie gegen Korrosion.

Das die Matrix für die Hartpartikel bildende Grundmaterial kann lösungsmittelbasiert sein, so kann als Lösungsmittel beispielsweise ein Kohlenwasserstoffgemisch verwendet werden. Besonders vorteilhaft ist es, wenn die Matrix im Vergleich zum Bandmaterial eine ausreichende Flexibilität gewährleistet, wie dies von vielen Kunststoffen, insbesondere von thermoplastischen Kunststoffen gewährleistet wird. Herstellungsbedingt kann die Matrix auch noch andere Stoffe aufweisen, wobei nach Verdunsten des Lösungsmittels der überwiegende Teil der Matrix aus Polymeren besteht.

Als Hartpartikel können bevorzugt organische Partikel, insbesondere Weizengrieß, Partikel aus Nussschalen, Reis oder Partikel aus gebrochenen Kirschenkernen, und/oder anorganische Partikel, insbesondere ausgewählt aus der Gruppe, Korund (Al2O3), Rubin, Saphir, Quarz (SiO2), Topas (Al2[(F,OH)2|SiO4]), Siliciumcarbid (SiC), Diamant (C), Bornitrid (BN), Aggregierte Diamant-Nanostäbchen (ADNR), ZrO2 und alle möglichen Dotierungen von ZrO2, insbesondere 8YSZ und 3 YSZ, Sand, TiO2, Metall- oder Keramikpulver und anorganische Agglomerate, verwendet werden.

Der Bandkörper des Endlosbandes kann hierbei aus einem Metallblech gefertigt sein, dessen Stirnkanten miteinander verschweißt sind, sodass ein geschlossener Ring gebildet ist. Der Bandkörper kann jedoch auch aus einem Metallblech bestehen dessen Längskanten schraubenlinienförmig angeordnet sind und eine schraubenförmige Längsscheißnaht aufweisen, wie dies beispielsweise aus der US3728066A bekannt geworden ist. Alternativ zur Verwendung von nur einem einzigen Metallblech zur Herstellung des Bandkörpers können auch mehrere miteinander verschweißte Metallbleche zum Einsatz kommen. So kann der Bandkörper aus zwei oder mehreren Metallblechen gebildet sein, deren Längskanten und Stirnkanten miteinander verschweißt sind, sodass ein geschlossener Ring beliebiger Breite und Länge hergestellt werden kann, wie dies beispielsweise aus der AT514722B1 bekannt geworden ist.

Das Aufbringen der Beschichtung auf das Endlosband wird dadurch vereinfacht, dass der zu einem endlosen Ring geschlossene Bandkörper vor Aufbringen der Beschichtung zwischen zwei Rollen umlaufend angeordnet wird.

Das Grundmaterial kann, bevorzugt gemeinsam mit den Hartpartikeln, beispielsweise auch durch Spritzen, Walzen, Spachteln, Pinseln, und ähnliche Verfahren auf die Bandoberfläche aufgebracht werden.

Bevorzugt werden das Grundmaterial und die Hartpartikel auf ein Obertrum des zu einem geschlossenen Ring geformten Bandkörpers aufgebracht und mit der Rakelgleichmäßig auf dem Obertrum verteilt, wobei der Bandkörper während oder nach dem Verteilen des Grundmaterials und der Hartpartikeln in einer Umlaufrichtung weiterbewegt wird. Das Obertrum des Endlosbandes umfasst einen oberen zwischen den beiden Umlenkrollen befindlichen sowie einen oberen auf den Umlenkrollen aufliegenden Abschnitt des Endlosbandes. Der untere dem Obertrum gegenüberliegende Teil des Endlosbandes wird als Untertrum bezeichnet.

Als besonders vorteilhaft hinsichtlich der Effizienz des Aufbringens der Beschichtung hat sich eine Variante der Erfindung erwiesen, bei welcher die Hartpartikel in das die Matrix für die Hartpartikel bildende Grundmaterial vor einem Auftragen auf die erste Hauptoberfläche des Bandkörpers eingemischt werden.

Als besonders geeignet zur Realisierung der Erfindung haben sich Hartpartikel mit einer Korngröße zwischen 0,01 und 3 mm bevorzugt zwischen 0,05 bis 2 mm, besonders bevorzugt zwischen 0,1 bis 1 mm, erwiesen. Die hier angeführten Werte repräsentieren einen Mittelwert der Partikelgröße. Die oben genannte Aufgabe lässt sich auch mit einem Endlosband der eingangs genannten Art erfindungsgemäß durch die Merkmale des kennzeichnenden Teils des Anspruchs 8 lösen.

Als besonders vorteilhaft hat sich eine Variante erwiesen, bei welcher die Hartpartikel organische Partikel, insbesondere Weizengrieß, Partikel aus Nussschalen, Reis oder Partikel aus gebrochenen Kirschenkernen, und/oder anorganische Partikel, insbesondere ausgewählt aus der Gruppe, Korund (Al2O3), Rubin, Saphir, Quarz (SiO2), Topas (Al2[(F,OH)2|SiO4]), Siliciumcarbid (SiC), Diamant (C), Bornitrid (BN), Aggregierte Diamant-Nanostäbchen (ADNR), ZrO2 und alle möglichen Dotierungen von ZrO2, insbesondere 8YSZ und 3 YSZ, Sand, TiO2, Metall- oder Keramikpulver und anorganische Agglomerate, sind.

Bevorzugt weisen die Hartpartikel eine Korngröße zwischen 0,01 und 3 mm, bevorzugt zwischen 0,05 bis 2 mm, besonders bevorzugt zwischen 0,1 bis 1 mm auf.

Zudem hat es sich als besonders vorteilhaft erweisen, wenn eine Oberfläche der Beschichtung 1 bis 10000, bevorzugt 1 bis 1000, besonders bevorzugt 10 bis 1000, Hartpartikel pro cm² aufweist.

Eine besonders gut für Anwendungen in Fahrzeugprüfständen, Windkanälen und dergleichen geeignete Weiterbildung der Erfindung sieht vor, dass die Beschichtung in einem trockenen und in einem nassen Oberflächenzustand eine Rutschhemmung von R13 gemäß DIN-51130 aufweist.

Als besonders vorteilhaft bezüglich Haftung auf dem Bandkörper und Realisierung einer guten Simulation von Straßenverhältnissen hat sich erwiesen, dass die Beschichtung eine Schichtdicke zwischen 0,1 und 5 mm, insbesondere zwischen 0,5 und 1,5 mm aufweist.

Zudem hat es sich als besonders vorteilhaft erwiesen, dass die Beschichtung eine mittlere Rautiefe von mehr als 100 µm, bevorzugt von mehr als 300 µm, besonders bevorzugt von mehr als 500 µm aufweist.

Eine Ausführungsform der Erfindung, die besonders für den Einsatz als Radantriebsband in Fahrprüfständen oder in Windkanälen und dergleichen geeignet ist, sieht vor, dass das Endlosband eine Umfangslänge zwischen 0,2 m und 30 m, insbesondere zwischen 1 m und 25 m, und eine Dicke zwischen 0,1 mm und 4 mm, insbesondere zwischen 0,2 mm und 1,2 mm und eine Breite zwischen 0,1 m und 10 m, insbesondere zwischen 0,2 m und 3,2 m, aufweist.

Die Dauerbelastbarkeit der Beschichtung lässt sich dadurch wesentlich erhöhen, dass die Beschichtung stoßfrei ist. Bei dieser Variante der Erfindung weist die Beschichtung keine erkennbaren Anfangs- und Endstellen auf, wie diese beispielsweise bei Verwendung einer Folie der Fall wäre, sondern geht ohne Unstetigkeitsstelle in sich selbst über.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines erfindungsgemäßen Endlosbandes;
- Fig. 2: einen Schnitt entlang der Linie II-II in Fig.1 und
- Fig. 3: eine Darstellung des erfindungsgemäßen Herstellungsverfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Zudem sei darauf hingewiesen, dass die Ausführungsbeispiele Figuren übergreifend beschrieben sind.

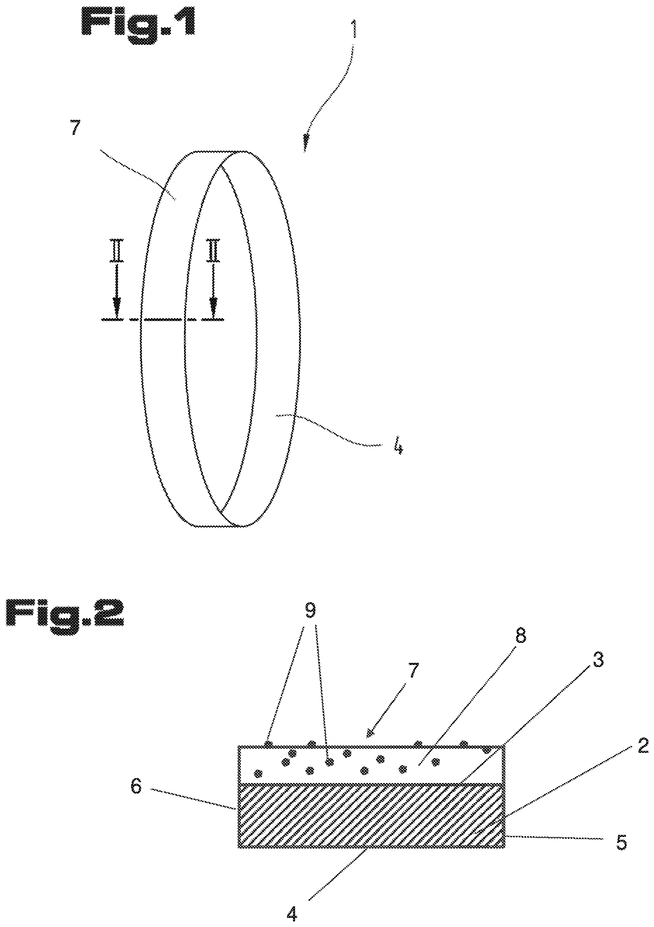

Gemäß Fig. 1 und 2 weist ein erfindungsgemäßes Endlosband 1 einen Bandkörper 2 mit einer ersten Hauptoberfläche 3 und eine zweite Hauptoberfläche 4 auf. Die erste Hauptoberfläche 3 und die zweite Hauptoberfläche 4 des Bandkörpers 2 sind über Seitenkanten 5, 6 miteinander verbunden. Die Innenseite des Endlosbandes 1 kann durch die zweite Hauptoberfläche 4 gebildet sein. Auf die der Innenseite des Endlosbandes 1 gegenüberliegende Hauptoberfläche 3 des Bandkörpers 2 ist eine Beschichtung 7 aufgebracht.

Die Beschichtung 7 bildet eine Außenseite des Endlosbandes 1 und weist eine aus einem Grundmaterial 8 bestehende Matrix, in welche Hartpartikel 9 eingebettet sind auf. Die Hartpartikel 9 sind aus einem Material, welches eine Härte gemessen nach Vickers von über 500 [HV], insbesondere eine Härte zwischen 1400 [HV] und 10060 [HV] aufweisen kann. Die in diesem Dokument angegebenen Vickers-Härtewerte beziehen sich auf eine Vickers-Härteprüfung mit einer Prüfkraft ≥ 49,03 N, insbesondere 49,03 N. Anders gesagt, sind die Hartpartikel aus einem Material, welches bevorzugt eine Mohs Härte von über 5, insbesondere zwischen 6 und 10 aufweist. Die Angabe in Mohs Härte stellt hierbei eine Alternative zu der Angabe der Vickers-Härte dar.

Die Beschichtung 7 ist direkt auf der ersten Hauptoberfläche 3 des Bandkörpers 2 aufgebracht. Der Bandkörper 2 ist aus Metall, insbesondere aus Stahl gefertigt.

Die Beschichtung 7 kann beispielsweise eine Schichtdicke zwischen 0,2 und 2 mm, insbesondere zwischen 0,5 und 1,5 mm und eine mittlere Rautiefe von mehr als 100 µm, bevorzugt von mehr als 300 µm, besonders bevorzugt von mehr als 500 µm aufweisen. Zudem kann die Beschichtung 7 stoßfrei und weitgehend homogen ausgebildet sein.

Das Endlosband 1 kann eine Umfangslänge zwischen 0,2 m und 30 m, insbesondere zwischen 1 m und 25 m und eine Dicke zwischen 0,1 mm und 4 mm, insbesondere zwischen 0,2 mm und 1,2 mm und eine Breite zwischen 0,1 m und 10 m, insbesondere zwischen 0,2 m und 3,2 m, aufweisen.

Das die Matrix für die Hartpartikel 9 bildende Grundmaterial 8 ist aus einem Polymer oder einer Mischung von Polymeren gebildet sein. Bevorzugt ist das zum Einsatz kommende Polymer oder Polymergemisch ausgewählt aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT) , Polyethylenterephthalat (PET), Polyamid (PA), Polycarbonat (PC), Cycloolefincopolymere (COC), Polyoximethylen (POM), Acrylnitril-butadien-styrol (ABS), Polyvinylcarbonat (PVC), Ethylentetrafluorethylen (ETFE), Polytetrafluorethylen (PTFE), Polyvinylfluorid (PVF), Polyvinylidenfluorid (PVDF) und/oder Ethylen-Tetrafluorethylen-Hexafluorpropylen-Fluorterpolymer (EFEP). Besonders bevorzugt ist das Grundmaterial 8 aus einem thermoplastischen Polymer gebildet, wobei jedoch grundsätzlich auch duroplastische oder elastomere Polymere verwendet werden können, um die aus dem Grundmaterial 8 gebildete Matrix zu realisieren.

Die Hartpartikel 9 können durch organische Partikel, insbesondere Weizengrieß, Partikel aus Nussschalen, Reis oder Partikel aus gebrochenen Kirschenkernen, und/oder anorganische Partikel, insbesondere ausgewählt aus der Gruppe, Korund (Al2O3), Rubin, Saphir, Quarz (SiO2), Topas (Al2[(F,OH)2|SiO4]), Siliciumcarbid (SiC), Diamant (C), Bornitrid (BN), Aggregierte Diamant-Nanostäbchen (ADNR), ZrO2 und alle möglichen Dotierungen von ZrO2, insbesondere 8YSZ und 3 YSZ, Sand, TiO2, Metall- oder Keramikpulver und anorganische Agglomerate, gebildet sein.

Eine mittlere Korngröße der Hartpartikel 9 beträgt bevorzugt zwischen 0,01 und 3 mm bevorzugt zwischen 0,05 bis 2 mm, besonders bevorzugt zwischen 0,1 bis 1 mm. Die Hartpartikel 9 können als Einzelpartikel vorliegen oder, wie es bei feineren Korngrößen oft der Fall ist, in Form von Agglomeraten. Die einzelnen Partikel können ähnlich sein und eine reguläre geometrische Form aufweisen - beispielsweise kugelförmig oder zylinderförmig. Die einzelnen Partikel können aber auch unregelmäßig Form haben und keine Ähnlichkeit aufweisen. Hier sei beispielhaft die Herstellung von Pulvern über Brechen und Mahlen angeführt, wie sie häufig bei keramischen Partikeln Anwendung findet. Derartig hergestellte Pulver haben eine weite Partikelgrößenverteilung welche statistisch verteilt ist, wobei der d50 Parameter als Mittelwert der Partikelgröße herangezogen wird. Der mittlere Durchmesser d50 derartiger Hartpartikel 9 liegt zwischen 0,01 bis 3 mm, bevorzugt zwischen 0,05 bis 2 mm, und besonders bevorzugt zwischen 0,1 bis 1 mm. Eine Oberfläche der Beschichtung 7 kann beispielsweise 1 bis 10000, bevorzugt 1 bis 1000, besonders bevorzugt 10 bis 1000, Hartpartikel pro cm² aufweisen. In einem trockenen und in einem nassen Oberflächenzustand weist die Beschichtung 7 bevorzugt eine Rutschhemmung von R13 gemäß DIN-51130 auf.

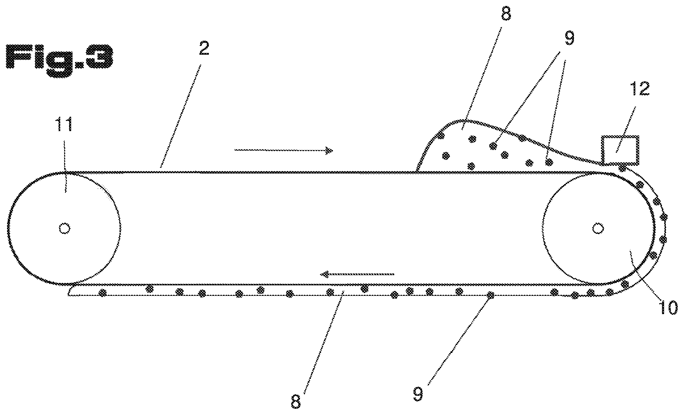

Zur Herstellung des erfindungsgemäßen Endlosbandes 1 wird gemäß Fig. 3 das Grundmaterial 8 direkt auf die erste Hauptoberfläche 3 des Bandkörpers 2 aufgebracht. Das Grundmaterial 8 kann hierbei in einer flüssigen, insbesondere dickflüssigen Form, bevorzugt in dickflüssiger Form mit einer dynamischen Viskosität von 10² - 10⁵ mPas, insbesondere 10⁴ - 10⁵ mPas auf die erste Hauptoberfläche 3 des Bandkörpers 2 aufgebracht werden.

Gemäß einer bevorzugten Variante der Erfindung werden die Hartpartikel 9 bereits vor einem Auftragen des Grundmaterials 8 auf den Bandkörper 2 in das Grundmaterial 8 eingemischt. Alternativ kann aber das Grundmaterial 8 zuerst auf den Bandkörper 2 aufgebracht werden und dann die Hartpartikel 9 in dem bereits aufgebrachten Grundmaterial 8 verteilt werden. So können die Hartpartikel 9 beispielsweise über das noch feuchte Grundmaterial 8 verstreut werden. Die Hartpartikel 9 können in der aus dem Grundmaterial 8 gebildeten Matrix statistisch verteilt sein.

Das Grundmaterial 8 und die Hartpartikel 9 können mittels einer Rakel 12, beispielsweise mittels einer leistenförmigen Rakel, gleichmäßig auf der ersten Hauptoberfläche 3 des Bandkörpers 2 verteilt werden.

Alternativ oder zusätzlich zur Verwendung einer Rakel, können das Grundmaterial 8 und die Hartpartikel 9 auch durch Aufwalzen, Aufspachteln, Aufpinseln, (Auf-)Extrudieren oder Aufsprühen auf die Oberfläche des Bandkörpers 2 aufgebracht und verteilt werden. Auch eine Beschichtung des Bandkörpers 2 mit dem Grundmaterial 8 und den Hartpartikel 9 mittels eines Curtain Coating Verfahrens ist möglich.

Wie aus Fig. 3 weiters ersichtlich ist kann der Bandkörper 2 vor einem Aufbringen der Beschichtung 7 zu einem endlosen Ring geschlossen werden. Falls der Bandkörper 2 aus Metall hergestellt ist, kann dieser bevorzugt durch Verschweißen zu dem Ring geschlossen werden, wobei jedoch grundsätzlich auch andere Verbindungsarten wie Vernieten in Frage kommen würden. Der zu einem endlosen Ring geschlossene Bandkörper 2 kann vor Aufbringen der Beschichtung 7 zwischen zwei Rollen 10, 11 umlaufend angeordnet werden.

Das Grundmaterial 8 und die Hartpartikel 9 können auf ein Obertrum des zu einem geschlossenen Ring geformten Bandkörpers 2 aufgebracht werden und beispielsweise mit der Rakel 12 gleichmäßig auf dem Obertrum verteilt werden. Der Bandkörper 2 kann während oder nach dem Verteilen des Grundmaterials 8 und der Hartpartikeln 9 in einer Umlaufrichtung weiterbewegt werden. Nach einem Trocknen des Grundmaterials 8 sind die Hartpartikel 9 fest in dieses eingebettet und die aus dem getrockneten Grundmaterial 8 und den Hartpartikeln 9 gebildete Beschichtung 7 unlösbar mit der ersten Hauptoberfläche 3 des Bandkörpers 2 des Endlosbandes 1 verbunden.

Die Beschichtung 7 kann in einer einzigen Bahn auf den geschlossenen Bandkörper 2 aufgebracht werden, oder aber auch in mehreren Bahnen. Zwischen den Bahnen kann sich ein nicht beschichteter Spalt befinden. Bevorzugt wird der Bandkörper 2 nicht bis zum Rand beschichtet, um eine Steuerung der Bandbewegung mit einem Bandkantensensor zu ermöglichen. Im Falle mehrerer Bahnen können diese eine unterschiedliche Breite aufweisen. Die Bahnen können aber auch eine unterschiedliche Beschichtungen 7 hinsichtlich der Zusammensetzung der Matrix und der Hartpartikel 9 aufweisen.

Bei Bedarf könnte noch eine Nachbehandlung im Nassen oder auch im trockenen Zustand der Beschichtung 7 erfolgen, beispielsweise durch Schleifen, Kratzen, Glätten, Polieren, Dressieren, Texturieren. Insbesondere bei Verwendung eines thermoplastischen Kunststoffes als Grundmaterial 8 für die Matrix kann zur Veränderung der Oberfläche nach dem Trocknen der Beschichtung 7 eine nachträgliche Wärmebehandlung erfolgen. Eine derartige Wärmebehandlung kann die gesamte Oberfläche einschließen, sodass die Beschichtungseigenschaften global verändert werden - z.B. können die Textur, die Homogenität oder Eigenspannungen etc. der Beschichtung 7 verändert werden. Bei Bedarf kann ein Wärmeeintrag auch nur lokal erfolgen, um etwaige lokale Strukturierungen, insbesondere bei einer thermoplastischen Matrix, einzubringen.

Insbesondere besteht die Möglichkeit die Beschichtung 7 auch mehrschichtig aufzubringen bzw. örtlich nachzubessern.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Endlosband
- 2: Bandkörper
- 3: Hauptoberfläche

## Patentansprüche

1. Verfahren zur Herstellung eines Endlosbandes (1) mit einem Bandkörper (2), der eine erste Hauptoberfläche (3) und eine zweite Hauptoberfläche (4) aufweist, wobei die erste Hauptoberfläche (3) und die zweite Hauptoberfläche (4) des Bandkörpers über Seitenkanten (5, 6) miteinander verbunden sind, wobei auf die erste, in einem fertiggestellten Zustand des Endlosbandes (1) einer Innenseite des Endlosbandes (1) gegenüberliegende Hauptoberfläche (3) des Bandkörpers (2) eine Beschichtung (7) aufgebracht wird, wobei die Beschichtung (7) in einem fertiggestellten Zustand eine Außenseite des Endlosbandes (1) bildet, wobei der Bandkörper (2) aus Metall hergestellt ist, wobei der Bandkörper (2) vor einem Aufbringen der Beschichtung (7), durch Verschweißen, zu einem endlosen Ring geschlossen wird, wobei als Beschichtung (7) auf die erste Hauptoberfläche (3) des Bandkörpers (2) eine aus zumindest einem Grundmaterial (8) bestehende Matrix, in welche Hartpartikel (9), insbesondere aus zumindest einem Material mit einer Härte gemessen nach Vickers von über 500 [HV], bevorzugt mit einer Härte zwischen 1400 [HV] und 10060 [HV], eingebettet werden und/oder eingebettet sind, aufgebracht wird, wobei die Beschichtung (6) direkt auf die erste Hauptoberfläche (3) des Bandkörpers (2) aufgebracht wird, **dadurch gekennzeichnet, dass** das Grundmaterial (8) in einer flüssigen, insbesondere dickflüssigen Form, bevorzugt in dickflüssiger Form mit einer dynamischen Viskosität von 10²- 10⁵ mPas, insbesondere 10⁴- 10⁵ mPas, bevorzugt gemeinsam mit den Hartpartikeln (9), auf die erste Hauptoberfläche (3) des Bandkörpers (2) aufgebracht und, insbesondere mittels einer Rakel (12), bevorzugt mittels einer leistenförmigen Rakel, gleichmäßig auf der ersten Hauptoberfläche (3) des Bandkörpers (2) verteilt wird, wobei das die Matrix für die Hartpartikel (9) bildende Grundmaterial (8) aus zumindest einem Polymer oder einer Mischung von Polymeren, insbesondere ausgewählt aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefineopolymere (COC), Polyoximethylen (POM), Acrylnitril-butadien-styrol (ABS), Polyvinylcarbonat (PVC), Ethylentetrafluorethylen (ETFE), Polytetrafluorethylen (PTFE), Polyvinylfluorid (PVF), Polyvinylidenfluorid (PVDF) und/oder Ethylen-Tetrafluorethylen-Hexafluorpropylen-Fluorterpolymer (EFEP), bevorzugt einem thermoplastischen Polymer hergestellt ist.

2. Verfahren nach Anspruch 1 oder 2, **dadurch gekennzeichnet, dass** als Hartpartikel (9) organische Partikel, insbesondere Weizengrieß, Partikel aus Nussschalen, Reis oder Partikel aus gebrochenen Kirschenkernen, und/oder anorganische Partikel, insbesondere ausgewählt aus der Gruppe, Korund (Al2O3), Rubin, Saphir, Quarz (SiO2), Topas (Al2[(F,OH)2|SiO4]), Siliciumcarbid (SiC), Diamant (C), Bornitrid (BN), Aggregierte Diamant-Nanostäbchen (ADNR), ZrO2, Dotierungen von ZrO2, insbesondere 8YSZ und 3 YSZ, Sand, TiO2, Metall- oder Keramikpulver und anorganische Agglomerate, verwendet werden.

3. Verfahren nach Anspruch 1 oder 2, **dadurch gekennzeichnet, dass** der zu einem endlosen Ring geschlossene Bandkörper (2) vor Aufbringen der Beschichtung (7) zwischen zwei Rollen (10, 11) umlaufend angeordnet wird.

4. Verfahren nach Anspruch 3, **dadurch gekennzeichnet, dass** das Grundmaterial (8) und die Hartpartikel (9) auf ein Obertrum des zu einem geschlossenen Ring geformten Bandkörpers (2) aufgebracht und, insbesondere mit der Rakel (12), gleichmäßig auf dem Obertrum verteilt wird, wobei der Bandkörper (2) während oder nach dem Verteilen des Grundmaterials (8) und der Hartpartikeln (9) in einer Umlaufrichtung weiterbewegt wird.

5. Verfahren nach einem der Ansprüche 1 bis 4, **dadurch gekennzeichnet, dass** die Hartpartikel (9) in das die Matrix für die Hartpartikel (9) bildende Grundmaterial (8) vor einem Auftragen auf die erste Hauptoberfläche (3) des Bandkörpers (2) eingemischt werden.

6. Verfahren nach einem der Ansprüche 1 bis 5, **dadurch gekennzeichnet, dass** das Grundmaterial (8), insbesondere das Grundmaterial (8) und die Hartpartikel (9) auf die erste Hauptoberfläche (3) aufgesprüht, aufgepinselt, aufgewalzt und/oder aufgespachtelt werden.

7. Verfahren nach einem der Ansprüche 1 bis 6, **dadurch gekennzeichnet, dass** die Hartpartikel (9) eine Korngröße zwischen 0,01 und 3 mm, bevorzugt zwischen 0,05 bis 2 mm, besonders bevorzugt zwischen 0,1 bis 1 mm aufweisen.

8. Endlosband (1), **dadurch gekennzeichnet, dass** es nach einem der Ansprüche 1 bis 7 hergestellt ist, mit einem Bandkörper (2), der eine erste Hauptoberfläche (3) und eine zweite Hauptoberfläche (4) aufweist, wobei die erste Hauptoberfläche (3) und die zweite Hauptoberfläche (4) des Bandkörpers (2) über Seitenkanten (5, 6) miteinander verbunden sind, wobei auf die erste, einer Innenseite des Endlosbandes (1) gegenüberliegende Hauptoberfläche (3) des Bandkörpers (2) eine Beschichtung (7) aufgebracht ist, wobei die Beschichtung (7) eine Außenseite des Endlosbandes (1) bildet, wobei der Bandkörper (2) aus Metall, insbesondere aus Stahl gefertigt ist wobei die Beschichtung (7) eine aus zumindest einem Grundmaterial (8) bestehende Matrix, in welche Hartpartikel (9) insbesondere aus zumindest einem Material mit einer Härte gemessen nach Vickers von über 500 [HV], bevorzugt mit einer Härte zwischen 1400 [HV] und 10060 [HV], eingebettet sind, aufweist, wobei die Beschichtung (7) direkt auf der ersten Hauptoberfläche (3) des Bandkörpers (2) aufgebracht ist, **dadurch gekennzeichnet, dass** das die Matrix für die Hartpartikel (9) bildende Grundmaterial (8) aus zumindest einem Polymer oder einer Mischung von Polymeren, insbesondere ausgewählt aus der Gruppe Polyimid (PI), Polypropylen (PP), monoaxial orientiertem Polypropylen (MOPP), biaxial orientierten Polypropylen (BOPP), Polyethylen (PE), Polyphenylensulfid (PPS), Polyetheretherketon (PEEK) Polyetherketon (PEK), Polyethylenimid (PEI), Polysulfon (PSU), Polyaryletherketon (PAEK), Polyethylennaphthalat (PEN), flüssigkristalline Polymere (LCP), Polyester, Polybutylenterephthalat (PBT), Polyethylenterephthalat (PET), Polyamid (PA), Polycarbonat (PC), Cycloolefincopolymere (COC), Polyoximethylen (POM), Acrylnitril-butadien-styrol (ABS), Polyvinylcarbonat (PVC), Ethylentetrafluorethylen (ETFE), Polytetrafluorethylen (PTFE), Polyvinylfluorid (PVF), Polyvinylidenfluorid (PVDF) und/oder Ethylen-Tetrafluorethylen-Hexafluorpropylen-Fluorterpolymer (EFEP), bevorzugt einem thermoplastischen Polymer hergestellt ist.

9. Endlosband nach Anspruch 8, **dadurch gekennzeichnet, dass** die Hartpartikel (9) organische Partikel, insbesondere Weizengrieß, Partikel aus Nussschalen, Reis oder Partikel aus gebrochenen Kirschenkernen, und/oder anorganische Partikel, insbesondere ausgewählt aus der Gruppe, Korund (Al2O3), Rubin, Saphir, Quarz (SiO2), Topas (Al2[(F,OH)2|SiO4]), Siliciumcarbid (SiC), Diamant (C), Bornitrid (BN), Aggregierte Diamant-Nanostäbchen (ADNR), ZrO2, Dotierungen von ZrO2, insbesondere 8YSZ und 3 YSZ, Sand, TiO2, Metall- oder Keramikpulver und anorganische Agglomerate, sind.

10. Endlosband nach einem Anspruch 8 oder 9, **dadurch gekennzeichnet, dass** die Hartpartikel (9) eine Korngröße zwischen 0,01 und 3 mm bevorzugt zwischen 0,05 bis 2 mm, besonders bevorzugt zwischen 0,1 bis 1 mm aufweisen.

11. Endlosband nach einem der Ansprüche 8 bis 10, **dadurch gekennzeichnet, dass** eine Oberfläche der Beschichtung (7) 1 bis 10000, bevorzugt 1 bis 1000, besonders bevorzugt 10 bis 1000, Hartpartikel pro cm² aufweist.

12. Endlosband nach einem der Ansprüche 8 bis 11, **dadurch gekennzeichnet, dass** die Beschichtung (7) in einem trockenen und in einem nassen Oberflächenzustand eine Rutschhemmung von R13 gemäß DIN-51130 aufweist.

13. Endlosband nach einem der Ansprüche 8 bis 12, **dadurch gekennzeichnet, dass** die Beschichtung (7) eine Schichtdicke zwischen 0,1 und 5 mm, insbesondere zwischen 0,5 und 1,5 mm aufweist.

14. Endlosband nach einem der Ansprüche 8 bis 13, **dadurch gekennzeichnet, dass** die Beschichtung (7) eine mittlere Rautiefe von mehr als 100 µm, bevorzugt von mehr als 300 µm, besonders bevorzugt von mehr als 500 µm aufweist.

15. Endlosband nach einem der Ansprüche 8 bis 14, **dadurch gekennzeichnet, dass** das Endlosband (1) eine Umfangslänge zwischen 0,2 m und 30 m, insbesondere zwischen 1 m und 25 m und eine Dicke zwischen 0,1 mm und 4 mm, insbesondere zwischen 0,2 mm und 1,2 mm und eine Breite zwischen 0,1 m und 10 m, insbesondere zwischen 0,2 m und 3,2 m, aufweist.

16. Endlosband nach einem der Ansprüche 8 bis 15, **dadurch gekennzeichnet, dass** die Beschichtung (7) stoßfrei ist.

## Claims

1. A method for producing an endless belt (1) having a belt body (2), which comprises a first main surface (3) and a second main surface (4), wherein the first main surface (3) and the second main surface (4) of the belt body are connected to one another via lateral edges (5, 6), wherein a coating (7) is applied to the first main surface (3) of the belt body (2) being opposite to an inner side of the endless belt (1) in a finished state of the endless belt (1), wherein the coating (7) forms an outer side of the endless belt (1) in a finished state, wherein the belt body (2) is made of metal, wherein the belt body (2) is closed by welding to form an endless ring before the coating (7) is applied, wherein, as coating (7) to the first main surface (3) of the belt body (2), a matrix is applied which consists of at least one base material (8), with hard particles (9), in particular of at least one material with a hardness measured according to Vickers of more than 500 [HV], preferably with a hardness between 1400 [HV] and 10060 [HV], being embedded and/or having been embedded into the matrix, wherein the coating (6) is applied directly to the first main surface (3) of the belt body (2), **characterized in that** the base material (8) is applied in a liquid, in particular viscous form, preferably in viscous form with a dynamic viscosity of 10² - 10⁵ mPas, in particular 10⁴- 10⁵ mPas, preferably together with the hard particles (9), to the first main surface (3) of the belt body (2) and is distributed uniformly on the first main surface (3) of the belt body (2), in particular by means of a doctor blade (12), preferably by means of a strip-shaped doctor blade, wherein the base material (8) forming the matrix for the hard particles (9) is made of at least one polymer or a mixture of polymers, in particular selected from the group of polyimide (PI), polypropylene (PP), monoaxially oriented polypropylene (MOPP), biaxially oriented polypropylene (BOPP), polyethylene (PE), polyphenylene sulfide (PPS), polyetheretherketone (PEEK) polyetherketone (PEK), polyethyleneimide (PEI), polysulfone (PSU), Polyaryletherketone (PAEK), Polyethylene naphthalate (PEN), Liquid crystalline polymers (LCP), Polyester, Polybutylene terephthalate (PBT), Polyethylene terephthalate (PET), Polyamide (PA), Polycarbonate (PC), Cycloolefin copolymers (COC), Polyoxymethylene (POM), Acrylonitrile-butadiene-styrene (ABS), polyvinyl carbonate (PVC), ethylene tetrafluoroethylene (ETFE), polytetrafluoroethylene (PTFE), polyvinyl fluoride (PVF), polyvinylidene fluoride (PVDF) and/or ethylene-tetrafluoroethylene-hexafluoropropylene-fluoropolymer (EFEP), preferably a thermoplastic polymer.

2. The method according to claim 1 or 2, **characterized in that** organic particles, in particular wheat grit, particles from nut shells, rice or particles from broken cherry stones, and/or inorganic particles, in particular selected from the group, corundum (Al2O3), ruby, sapphire, quartz (SiO2), topaz (Al2[(F,OH)2|SiO4]), silicon carbide (SiC), diamond (C), boron nitride (BN), aggregated diamond nanorods (ADNR), ZrO2, dopants of ZrO2, in particular 8YSZ and 3 YSZ, sand, TiO2, metal or ceramic powders and inorganic agglomerates, are used as the hard particles (9).

3. The method according to claim 1 or 2, **characterized in that** the belt body (2), which is closed to form an endless ring, is circumferentially arranged between two rollers (10, 11) before the coating (7) is applied.

4. The method according to claim 3, **characterized in that** the base material (8) and the hard particles (9) are applied to an upper run of the belt body (2) formed into a closed ring and distributed uniformly on the upper run, in particular by means of the doctor blade (12), wherein the belt body (2) is moved further in a circumferential direction during or after the distribution of the base material (8) and the hard particles (9).

5. The method according to one of claims 1 to 4, **characterized in that** the hard particles (9) are mixed into the base material (8) forming the matrix for the hard particles (9) prior to application to the first main surface (3) of the belt body (2).

6. The method according to one of claims 1 to 5, **characterized in that** the base material (8), in particular the base material (8) and the hard particles (9) are sprayed, brushed, rolled and/or trowelled onto the first main surface (3).

7. The method according to one of claims 1 to 6, **characterized in that** the hard particles (9) have a grain size of between 0.01 and 3 mm, preferably between 0.05 to 2 mm, particularly preferred between 0.1 and 1 mm.

8. An endless belt (1), **characterized in that** it is produced according to one of claims 1 to 7, having a belt body (2), which comprises a first main surface (3) and a second main surface (4), wherein the first main surface (3) and the second main surface (4) of the belt body (2) are connected to one another via lateral edges (5, 6), wherein a coating (7) is applied to the first main surface (3) of the belt body (2) being opposite to an inner side of the endless belt (1), wherein the coating (7) forms an outer side of the endless belt (1), wherein the belt body (2) is made of metal, in particular of steel, wherein the coating (7) comprises a matrix which consists of at least one base material (8), with hard particles (9), in particular of at least one material with a hardness measured according to Vickers of more than 500 [HV], preferably with a hardness between 1400 [HV] and 10060 [HV], having been embedded into the matrix, wherein the coating (7) is applied directly to the first main surface (3) of the belt body (2), **characterized in that** the base material (8) forming the matrix for the hard particles (9) is made of at least one polymer or a mixture of polymers, in particular selected from the group of polyimide (PI), polypropylene (PP), monoaxially oriented polypropylene (MOPP), biaxially oriented polypropylene (BOPP), polyethylene (PE), polyphenylene sulfide (PPS), polyetheretherketone (PEEK) polyetherketone (PEK), polyethyleneimide (PEI), polysulfone (PSU), Polyaryletherketone (PAEK), Polyethylene naphthalate (PEN), Liquid crystalline polymers (LCP), Polyester, Polybutylene terephthalate (PBT), Polyethylene terephthalate (PET), Polyamide (PA), Polycarbonate (PC), Cycloolefin copolymers (COC), Polyoxymethylene (POM), Acrylonitrile-butadiene-styrene (ABS), polyvinyl carbonate (PVC), ethylene tetrafluoroethylene (ETFE), polytetrafluoroethylene (PTFE), polyvinyl fluoride (PVF), polyvinylidene fluoride (PVDF) and/or ethylene-tetrafluoroethylene-hexafluoropropylene-fluoropolymer (EFEP), preferably a thermoplastic polymer.

9. The endless belt according to claim 8, **characterized in that** the hard particles (9) are organic particles, in particular wheat grit, particles from nut shells, rice or particles from broken cherry stones, and/or inorganic particles, in particular selected from the group, corundum (Al2O3), ruby, sapphire, quartz (SiO2), topaz (Al2[(F,OH)2|SiO4]), silicon carbide (SiC), diamond (C), boron nitride (BN), aggregated diamond nanorods (ADNR), ZrO2, dopants of ZrO2, in particular 8YSZ and 3 YSZ, sand, TiO2, metal or ceramic powders and inorganic agglomerates.

10. The endless belt according to claim 8 or 9, **characterized in that** the hard particles (9) have a grain size of between 0.01 and 3 mm, preferably between 0.05 to 2 mm, particularly preferred between 0.1 and 1 mm.

11. The endless belt according to one of claims 8 to 10, **characterized in that** a surface of the coating (7) comprises 1 to 10000, preferably 1 to 1000, particularly preferred 10 to 1000, hard particles per cm².

12. The endless belt according to one of claims 8 to 11, **characterized in that** the coating (7) has a slip resistance of R13 according to DIN-51130 in a dry and in a wet surface condition.

13. The endless belt according to one of claims 8 to 12, **characterized in that** the coating (7) has a layer thickness of between 0.1 and 5 mm, in particular of between 0.5 and 1.5 mm.

14. The endless belt according to one of claims 8 to 13, **characterized in that** the coating (7) has an average roughness depth of more than 100 µm, preferably of more than 300 µm, particularly preferred of more than 500 µm.

15. The endless belt according to one of claims 8 to 14, **characterized in that** the endless belt (1) has a circumferential length of between 0.2 m and 30 m, in particular between 1 m and 25 m and a thickness of between 0.1 mm and 4 mm, in particular between 0.2 mm and 1.2 mm and a width of between 0.1 m and 10 m, in particular between 0.2 m and 3.2 m.

16. The endless belt according to one of claims 8 to 15, **characterized in that** the coating (7) is seamless.

## Revendications

1. Procédé de fabrication d'une courroie sans fin (1) avec un corps de courroie (2) présentant une première surface principale (3) et une deuxième surface principale (4), dans lequel la première surface principale (3) et la deuxième surface principale (4) du corps de courroie sont reliées entre elles par l'intermédiaire d'arêtes latérales (5, 6), dans lequel un revêtement (7) est appliqué sur la première surface principale (3) du corps de courroie (2) opposée à une face intérieure de la courroie sans fin (1) dans un état fini de la courroie sans fin (1), dans lequel le revêtement (7) forme une face extérieure de la courroie sans fin (1) dans un état fini, dans lequel le corps de courroie (2) est fabriqué en métal, dans lequel le corps de courroie (2) est fermé par soudage avant l'application du revêtement (7) afin de fournir un anneau sans fin, dans lequel une matrice constituée d'au moins un matériau de base (8) et au sein de laquelle seront et/ou sont intégrées des particules dures (9), en particulier issues d'au moins un matériau présentant une dureté mesurée selon Vickers supérieure à 500 [HV], de manière préférée présentant une dureté comprise entre 1400 [HV] et 10060 [HV], est appliquée sous forme de revêtement (7) sur la première surface principale (3) du corps de courroie (2), dans lequel le revêtement (6) est directement appliqué sur la première surface principale (3) du corps de courroie (2), **caractérisé en ce que** le matériau de base (8) est appliqué sur la première surface principale (3) du corps de courroie (2) sous une forme liquide, en particulier visqueuse, de manière préférée sous une forme visqueuse avec une viscosité dynamique comprise entre 10² et 10⁵ mPas, en particulier comprise entre 10⁴ et 10⁵ mPas, de manière préférée conjointement avec les particules dures (9), et est réparti de manière uniforme sur la première surface principale (3) du corps de courroie (2) en particulier au moyen d'un racloir (12), de manière préférée au moyen d'un racloir en forme de barre, dans lequel le matériau de base (8) formant la matrice destinée aux particules dures (9) est fabriqué à partir d'au moins un polymère ou d'un mélange de polymères, en particulier choisi(s) dans le groupe polyimide (PI), polypropylène (PP), polypropylène monoxialement orienté (MOPP), polypropylène biaxialement orienté (BOPP), polyéthylène (PE), poly(sulfure de phénylène) (PPS), polyétheréthercétone (PEEK), polyéthercétone (PEK), polyéthylénimine (PEI), polysulfone (PSU), polyaryléthercétone (PAEK), polynaphtalate d'éthylène (PEN), polymères cristallins liquides (LCP), polyester, polytéréphtalate de butylène (PBT), polytéréphtalate d'éthylène (PET), polyamide (PA), polycarbonate (PC), copolymères de cyclooléfines (COC), polyoxyméthylène (POM), acrylonitrile-butadiène-styrène (ABS), polyvinylcarbonate (PVC), éthylènetétrafluroéthylène (ETFE), polytétrafluoroéthylène (PTFE), polyfluorure de vinyle (PVF), polyfluorure de vinylidène (PVDF) et/ou terpolymère éthylène-tétrafluoroéthylène-hexafluoropropylène (EFEP), de manière préférée à partir d'un polymère thermoplastique.

2. Procédé selon la revendication 1 ou 2, **caractérisé en ce que** des particules organiques, en particulier de la semoule de blé, des particules de coques de noix, du riz ou des particules constituées de noyaux de cerises brisés et/ou des particules inorganiques, en particulier choisies dans le groupe suivant : corindon (Al2O3), rubis, saphir, quartz (SiO2), topaze (Al2[F,OH)2|SiO4]), carbure de silicium (SiC), diamant (C), nitrure de bore (BN), nanobâtonnets de diamant agrégés (ADNR), ZrO2, dopages de ZrO2, en particulier 8YSZ et 3YSZ, sable, TiO2, poudres métalliques ou de céramique et agglomérats inorganiques, sont utilisées comme particules dures (9).

3. Procédé selon la revendication 1 ou 2, **caractérisé en ce que** le corps de courroie (2) fermé en un anneau sans fin est agencé entre deux rouleaux (10, 11), de manière à circuler autour de ceux-ci, avant l'application du revêtement (7).

4. Procédé selon la revendication 3, **caractérisé en ce que** le matériau de base (8) et les particules dures (9) sont appliqués sur un brin supérieur du corps de courroie (2) formé en un anneau fermé et sont répartis de manière uniforme sur le brin supérieur, en particulier grâce à la raclette (12), dans lequel le corps de courroie (2) est déplacé dans une direction de circulation pendant ou après la répartition du matériau de base (8) et des particules dures (9).

5. Procédé selon l'une quelconque des revendications 1 à 4, **caractérisé en ce que** les particules dures (9) sont mélangées dans le matériau de base (8) formant la matrice destinée aux particules dures (9) avant une application sur la première surface principale (3) du corps de courroie (2).

6. Procédé selon l'une quelconque des revendications 1 à 5, **caractérisé en ce que** le matériau de base (8), en particulier le matériau de base (8) et les particules dures (9), sont pulvérisés, badigeonnés, laminés et/ou spatulés sur la première surface principale (3).

7. Procédé selon l'une quelconque des revendications 1 à 6, **caractérisé en ce que** les particules dures (9) présentent une taille de grain comprise entre 0,01 et 3 mm, de manière préférée comprise entre 0,05 et 2 mm, de manière particulièrement préférée comprise entre 0,1 et 1 mm.

8. Courroie sans fin (1), **caractérisée en ce qu'**elle est fabriquée selon l'une quelconque des revendications 1 à 7, avec un corps de courroie (2) présentant une première surface principale (3) et une deuxième surface principale (4), dans laquelle la première surface principale (3) et la deuxième surface principale (4) du corps de courroie sont reliées entre elles par l'intermédiaire d'arêtes latérales (5, 6), dans laquelle un revêtement (7) est appliqué sur la première surface principale (3) du corps de courroie (2) opposée à une face intérieure de la courroie sans fin (1), dans laquelle le revêtement (7) forme une face extérieure de la courroie sans fin (1), dans laquelle le corps de courroie (2) est fabriqué en métal, en particulier en acier, dans laquelle le revêtement présente une matrice constituée d'au moins un matériau de base (8) et au sein de laquelle sont intégrées des particules dures (9), en particulier issues d'au moins un matériau présentant une dureté mesurée selon Vickers supérieure à 500 [HV], de manière préférée présentant une dureté comprise entre 1400 [HV] et 10060 [HV], dans laquelle le revêtement (6) est directement appliqué sur la première surface principale (3) du corps de courroie (2), **caractérisée en ce que** le matériau de base (8) formant la matrice destinée aux particules dures (9) est fabriqué à partir d'au moins un polymère ou d'un mélange de polymères, en particulier choisi(s) dans le groupe polyimide (PI), polypropylène (PP), polypropylène monoxialement orienté (MOPP), polypropylène biaxialement orienté (BOPP), polyéthylène (PE), poly(sulfure de phénylène) (PPS), polyétheréthercétone (PEEK), polyéthercétone (PEK), polyéthylénimine (PEI), polysulfone (PSU), polyaryléthercétone (PAEK), polynaphtalate d'éthylène (PEN), polymères cristallins liquides (LCP), polyester, polytéréphtalate de butylène (PBT), polytéréphtalate d'éthylène (PET), polyamide (PA), polycarbonate (PC), copolymères de cyclooléfines (COC), polyoxyméthylène (POM), acrylonitrile-butadiène-styrène (ABS), polyvinylcarbonate (PVC), éthylènetétrafluroéthylène (ETFE), polytétrafluoroéthylène (PTFE), polyfluorure de vinyle (PVF), polyfluorure de vinylidène (PVDF) et/ou terpolymère éthylène-tétrafluoroéthylène-hexafluoropropylène (EFEP), de manière préférée à partir d'un polymère thermoplastique.

9. Courroie sans fin selon la revendication 8, **caractérisée en ce que** les particules dures (9) sont des particules organiques, en particulier de la semoule de blé, des particules de coques de noix, du riz ou des particules constituées de noyaux de cerises brisés et/ou des particules inorganiques, en particulier choisies dans le groupe suivant : corindon (Al2O3), rubis, saphir, quartz (SiO2), topaze (Al2[F,OH)2|SiO4]), carbure de silicium (SiC), diamant (C), nitrure de bore (BN), nanobâtonnets de diamant agrégés (ADNR), ZrO2, dopages de ZrO2, en particulier 8YSZ et 3YSZ, sable, TiO2, poudres métalliques ou de céramique et agglomérats inorganiques.

10. Courroie sans fin selon l'une quelconque des revendications 8 à 9, **caractérisée en ce que** les particules dures (9) présentent une taille de grain comprise entre 0,01 et 3 mm, de manière préférée comprise entre 0,05 et 2 mm, de manière particulièrement préférée comprise entre 0,1 et 1 mm.

11. Courroie sans fin selon l'une quelconque des revendications 8 à 10, **caractérisée en ce qu'**une surface du revêtement (7) comprend entre 1 et 10000, de manière préférée entre 1 et 1000, de manière plus particulièrement préférée entre 10 et 1000 particules dures par cm².

12. Courroie sans fin selon l'une quelconque des revendications 8 à 11, **caractérisée en ce que** le revêtement (7) présente, dans un état de surface sec et dans un état de surface humide, un effet antidérapant R13 selon la norme DIN-51130.

13. Courroie sans fin selon l'une quelconque des revendications 8 à 12, **caractérisée en ce que** le revêtement (7) présente une épaisseur de couche comprise entre 0,1 et 5 mm, en particulier comprise entre 0,5 et 1,5 mm.

14. Courroie sans fin selon l'une quelconque des revendications 8 à 13, **caractérisée en ce que** le revêtement (7) présente une rugosité de surface moyenne supérieure à 100 µm, de manière préférée supérieure à 300 µm, de manière plus particulièrement préférée supérieure à 500 µm.

15. Courroie sans fin selon l'une quelconque des revendications 8 à 14, **caractérisée en ce que** la courroie sans fin (1) présente une longueur circonférentielle comprise entre 0,2 m et 30 m, en particulier comprise entre 1 m et 25 m, et une épaisseur comprise entre 0,1 mm et 4 mm, en particulier comprise entre 0,2 mm et 1,2 mm, et une largeur comprise entre 0,1 m et 10 m, en particulier comprise entre 0,2 m et 3,2 m.

16. Courroie sans fin selon l'une quelconque des revendications 8 à 15, **caractérisée en ce que** le revêtement (7) est réalisé sans jointures.
